# EUROPÄISCHE PATENTANMELDUNG

(11) **EP 2 952 825 A1**
(43) Veröffentlichungstag der Anmeldung: **09.12.2015**
(21) Anmeldenummer: 15170282.6
(22) Anmeldetag: 02.06.2015
(51) Int. Cl.: F24J 2/46

(54) **KOLLEKTORWANNE FÜR EINEN SOLARTHERMIE-SONNENKOLLEKTOR**

(30) Priorität: 04.06.2014 AT 4412014
(71) Anmelder: Schwarz, Gerhard, 6380 St. Johann I.T. (AT); Welling, Robin M., 6363 Westendorf (AT)
(72) Erfinder: Schwarz, Gerhard, 6380 St. Johann I.T. (AT); Welling, Robin M., 6363 Westendorf (AT)
(74) Vertreter: Gangl, Markus

(57) **Zusammenfassung**

Kollektorwanne (1) für einen Solarthermie-Sonnenkollektor (2) mit einer Rückplatte (3) und einer Rahmenkonstruktion (4), die gemeinsam einen Innenraum (5) für Komponenten des Solarthermie-Sonnenkollektors (2) ausbilden, wobei die Rückplatte (3) und die Rahmenkonstruktion (4) durch eine umlaufende Schweißnaht (6) wasserdicht verbunden sind und wobei die Rahmenkonstruktion (4) aus mehreren, vorzugsweise vier, Profilstücken (7), vorzugsweise Aluminiumprofilen, zusammengesetzt ist, wobei die Profilstücke (7) einen dem Innenraum (5) zugewandten Steg (9) aufweisen und die umlaufende Schweißnaht (6) im Bereich des Stegs (9) angebracht ist.

## Beschreibung

Die vorliegende Erfindung betrifft eine Kollektorwanne für einen Solarthermie-Sonnenkollektor mit einer Rückplatte und einer Rahmenkonstruktion, die gemeinsam einen Innenraum für Komponenten des Solarthermie-Sonnenkollektors ausbilden, wobei die Rückplatte und die Rahmenkonstruktion durch eine umlaufende Schweißnaht wasserdicht verbunden sind und wobei die Rahmenkonstruktion aus mehreren, vorzugsweise vier, Profilstücken, vorzugsweise Aluminiumprofilen, zusammengesetzt ist.

Im Stand der Technik sind Solarkollektoren, deren prinzipieller Aufbau durch einen in ein Wannensystem eingebauten Absorber mit Dämmung und einer Glasvorderfront gegeben ist, bekannt. Die DE 10 2007 055 293 A1 beschreibt z.B. einen Flachkollektor zur Gewinnung von Sonnenwärme, wobei der dabei verwendete Kollektor aus einer zweiteiligen, schweißtechnisch verbundenen Wannenkonstruktion aus glasfaserverstärktem Kunststoff besteht. Der Kollektor ist wiederum formschlüssig in eine entsprechend ausgeformte Wärmedämmung eingepasst und mit einer Solarglasabdeckplatte abgedeckt und mittels eines umlaufenden Abdichtbandes abgedichtet. Dieser Verbund wird abschließend von einem umlaufenden Rahmenprofil an den Seiten umfasst und eingespannt. Konstruktionsbedingt kommen der Wärmedämmung zudem die Aufgaben zuteil, den Flachkollektor vor Feuchtigkeit, Schlagwasser und mechanischen Einflüssen zu schützen.

Die DE 10 2008 064 010 zeigt ein Fassadenelement mit plattenförmigem Thermosolarkollektor, bei welchem ein Kollektor in einem Gehäuse aus mit Abstandshaltern verklebten Glaselementen angebracht ist. Zur Herstellung des Kollektors kann dabei Edelstahl-, Kupfer- oder Aluminiumblech verwendet werden. Die zweischalige Konstruktion wird randseitig umlaufend zugeschweißt oder zugelötet und wird so gleichzeitig verbunden und dichtgemacht. Im Mittenbereich werden die zwei Bleche zudem punkt- oder linienförmig miteinander verbunden, um so Strömungsbahnen für das Wärmetauschermedium auszubilden. Bei einer Konstruktionsweise, bei der der Thermosolarkollektor die Rückwand des Fassadenelements ausbildet, kann zudem eine rückseitige Wärmeisolation vorgesehen sein. Dem äußeren Glaselement des Isolierglasverbundes kommt dabei auch die Aufgabe zuteil, über daran ausgebildete Glasüberstände in an den zugeordneten Riegeln und Pfosten einer Fassade anzuschlagen und somit auch die Aufgabe, ein tragendes Bauteil auszubilden.

Die EP 2 543 938 A1 zeigt einen thermischen Vakuum-Solarkollektor mit einer für Sonnenstrahlung durchlässigen Glasvorderplatte, einer Metallbodenplatte, einem mit der Metallbodenplatte verbundenen Umfangsrahmen und einem Umfangsgurt, der den Umfangsrahmen mit der Glasvorderplatte verbindet. Der Umfangsrahmen und der Umfangsgurt sind von einem geformten Bimetallstreifen aus zwei miteinander verbundenen Metallstreifen ausgebildet, wobei der ersten Metallstreifen mit dem Umfangsrahmen und der zweite Metallstreifen mit dem Umfangsgurt korrespondiert. Die freie Kante des Umfangsgurts ist an der Glasvorderplatte abgedichtet und die Metallbodenplatte ist mit der freien Kante des Umfangsrahmens mit beispielsweise einer Schweißverbindung abgedichtet.

Aufgabe der Erfindung ist es, eine gegenüber dem Stand der Technik verbesserte Kollektorwanne für einen Solarthermie-Sonnenkollektor anzugeben.

Diese Aufgabe wird durch eine Kollektorwanne für einen Solarthermie-Sonnenkollektor mit den Merkmalen des Anspruchs 1 gelöst. Vorteilhafte Ausführungsformen der Erfindung sind in den abhängigen Ansprüchen definiert.

Demnach ist erfindungsgemäß vorgesehen, dass die Rückplatte und die Rahmenkonstruktion durch eine umlaufende Schweißnaht wasserdicht verbunden sind. Die dadurch entstehende Wannenkonstruktion erlaubt die prinzipielle wasser- und dampfdichte Ausbildung eines von der Kollektorwanne und einer geeigneten Abdeckung ausgebildeten Kollektorgehäuses, das zudem wirtschaftlich und fertigungstechnisch vorteilhaft in geringer Fertigungszeit hergestellt werden kann. Durch die wasserdichte Verbindung der Rückplatte und der Rahmenkonstruktion durch eine umlaufende Schweißnaht kann eine robuste, temperatur- und witterungsbeständige Kollektorwanne auf eine einfache Art und Weise hergestellt werden.

Besonders vorteilhaft kann dabei sein, dass die Rahmenkonstruktion aus mehreren, vorzugsweise vier, Profilstücken, vorzugsweise Aluminiumprofilen, zusammengesetzt ist. Durch eine geeignete Querschnittsform der Profilstücke der Rahmenkonstruktion kann so eine hohe mechanische Stabilität der Kollektorwanne erzielt werden. Zudem lässt sich durch Verwendung von Aluminiumprofilen eine leichte, preislich günstige und korrosionsbeständige und somit lange haltbare Konstruktionsweise bewerkstelligen. Auch lassen sich durch entsprechend abgelängte und mit passender Gehrung versehene Profilstücke beliebig ausgeformte Rahmenkonstruktionen zur Herstellung von Kollektorwannen realisieren.

Bevorzugt kann dabei vorgesehen sein, dass die Profilstücke der Rahmenkonstruktion durch je eine weitere Schweißnaht wasserdicht verbunden sind. Durch eine wasserdichte Verbindung der Profilstücke untereinander sind demnach keine weiteren Maßnahmen nötig, um die Rahmenkonstruktion selbst abzudichten.

Vorzugsweise ist es möglich, dass die Profilstücke einen dem Innenraum zugewandten Steg aufweisen. Wenn der Steg hinsichtlich seiner Profilstärke und Profilhöhe an die Wandstärke der Rückplatte angepasst wird, kann die Verbindung der von den Profistücken ausgebildeten Rahmenkonstruktion mit der Rückplatte durch die umlaufende Schweißnaht im Bereich des Stegs ermöglicht und auch verfahrenstechnisch begünstigt werden.

Es kann grundsätzlich vorgesehen sein, dass der Steg auf einem, vorzugsweise zu der Rückplatte im Wesentlichen parallelen, Schenkel der Profilstücke ausgeführt ist. Dabei muss der Steg nicht fluchtend am Ende des Schenkels des Profilstücks ausgeführt sein, wie es bei einem im Wesentlichen ein U-Profil aufweisenden Profilstück der Fall ist, sondern kann auch auf einer beliebigen Stelle auf dem vorzugsweise zu der Rückplatte im Wesentlichen parallelen Schenkel des Profilstücks ausgeführt sein.

Besonders vorteilhaft kann dabei sein, dass die umlaufende Schweißnaht im Bereich des Stegs angebracht ist. Dies bringt einerseits den Vorteil, dass der Bereich der Verschweißung fertigungstechnisch gut zugänglich ist und andererseits beim Verschweißen entstehende Verspannungen gut aufgenommen werden können.

Vorzugsweise ist es möglich, dass die Rückplatte im Bereich der Rahmenkonstruktion aufgebogene Randbereiche aufweist. Dadurch lassen sich z.B. etwaige Fertigungstoleranzen des Zuschnitts der Rückplatte an die Abmessungen der Rahmenkonstruktion anpassen.

Besonders vorteilhaft kann vorgesehen sein, dass die aufgebogenen Randbereiche mit der Rückplatte einen stumpfen Winkel einschließen. Dadurch lässt sich die Rückplatte einfach in die die Rückplatte umschließende Rahmenkonstruktion einpassen. Fertigungstechnisch notwendige Toleranzen können so auch leichter ausgeglichen werden.

Vorzugsweise ist es möglich, dass die Randbereiche der Rückplatte zum Anbringen der Schweißnaht federnd an die Rahmenkonstruktion angepresst sind. Dies kann fertigungstechnisch dadurch ermöglicht werden, dass der Umfang des von den Stegen der die Rahmenkonstruktion ausbildenden Profistücke eingeschlossenen Innenbereichs kleiner ist, als der von den äußeren Rändern der aufgebogenen Randbereiche ausgebildete Umfang der Rückplatte. Beim Zusammensetzen der Profilstücke bzw. der Rahmenkonstruktion mit der Rückplatte werden die aufgebogenen Randbereiche der Rückplatte durch die konstruktionsbedingt höhere Steifigkeit der Profilstücke somit weiter aufgebogen und so formschlüssig an die Rahmenkonstruktion federnd angepresst. Dadurch wird sichergestellt, dass Fertigungstoleranzen des Zuschnitts der Rückplatte und auch der Rahmenkonstruktion ausgeglichen werden und auch der nötige Kontakt der aufgebogenen Randbereiche zur Rahmenkonstruktion zur Verschweißung und wasserdichten Ausführung der Schweißnaht gewährleistet ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
- Fig. 1: eine Draufsicht des Kollektorgehäuses für einen Solarthermie-Sonnenkollektor,
- Fig. 2: eine perspektivische Ansicht eines Kollektorgehäuses für einen Solarthermie-Sonnenkollektor und
- Fig. 3: einen Ausschnitt einer Schnittzeichnung eines Solarthermie-Sonnenkollektors mit einem erfindungsgemäßen Kollektorgehäuse.

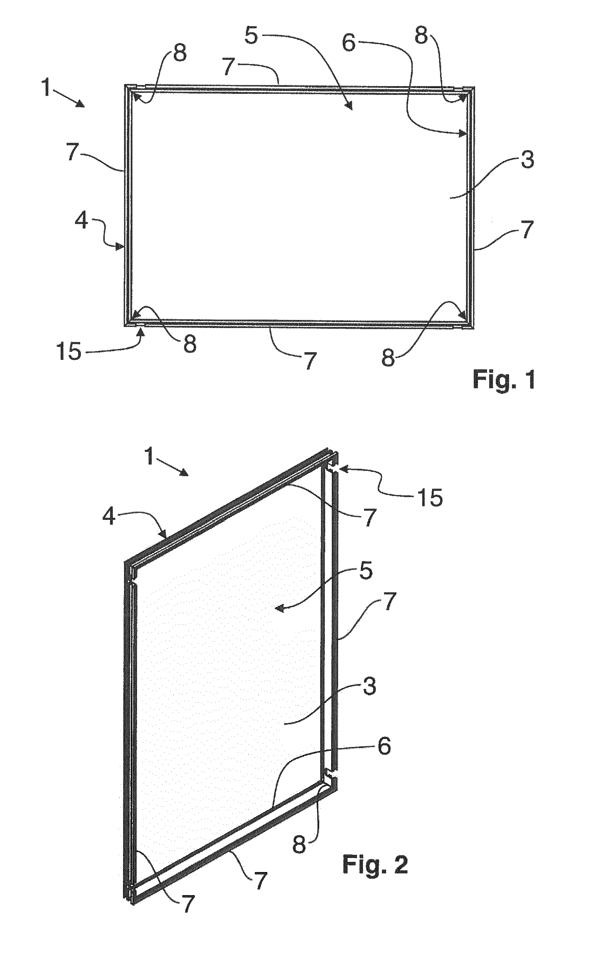

In Figur 1 ist die Draufsicht einer Kollektorwanne 1 für einen Solarthermie-Sonnenkollektor 2 mit den die Rahmenkonstruktion 4 ausbildenden Profilstücken 7 und der Rückplatte 3 gezeigt. Die Rahmenkonstruktion 4 und die Rückplatte 3 bilden dabei gemeinsam einen Innenraum 5 für Komponenten des Solarthermie-Sonnenkollektors 2 aus. Die Profilstücke 7 sind untereinander mit je einer Schweißnaht 8 wasserdicht verbunden und bilden so die Rahmenkonstruktion 4 aus. Die Rückplatte 3 ist wiederum mit der Rahmenkonstruktion 4 durch eine umlaufende Schweißnaht 6 wasserdicht verbunden, wodurch eine wasser- und dampfdichte Wannenkonstruktion entsteht. Durch diesen konstruktionsbedingten Vorteil der wasserdichten Ausführung der Verschweißung der Kollektorwanne 1 kann so zusammen mit einer geeigneten Abdeckung (nicht gezeigt) ein zuverlässig wasser- und dampfdichtes Kollektorgehäuse 17 ausgebildet werden. Zum Zu- und Abtransport des flüssigen oder gasförmigen Wärmeleitungsmediums des Solarthermie-Sonnenkollektors 2 sind in den Profilstücken 7 der Rahmenkonstruktion 4 Rahmendurchführungen 15 vorgesehen. Die Rückplatte 3 und die Profilstücke 7 können aus metallischen Werkstoffen, wie etwa Aluminium, Kupfer oder Stahl bestehen. Es ist jedoch auch denkbar, dass es sich bei dem Werkstoff um Kunststoff oder eine geeignete Kombination verschiedener metallischer Werkstoffe handelt.

In Figur 2 ist eine perspektivische Ansicht einer Kollektorwanne 1 für einen Solarthermie-Sonnenkollektor 2 gezeigt. Die Kollektorwanne 1 ist von der Rückwand 3 und den die Rahmenkonstruktion 4 ausbildenden Profilstücken 7 ausgebildet. Die durch jeweils eine Schweißnaht 8 zur Rahmenkonstruktion 4 verbundenen Profilstücke 7 sind mit der Rückplatte 3 durch eine umlaufende Schweißnaht 6 verbunden. Durch eine erfindungsgemäße Ausführung der Schweißnähte 6, 8 können die Profilstücke 7 und die Rückplatte 3 zu einer die Kollektorwanne 1 ausbildenden, wasserdichten Einheit verbunden werden. Um Zu- und Ableitungen zu Komponenten des Solarthermie-Sonnenkollektors 2 im von der Rückplatte 3 und der Rahmenkonstruktion 4 ausgebildeten Innenraum 5 zu ermöglichen, sind in den Profilstücken 7 Rahmendurchführungen 15 vorgesehen.

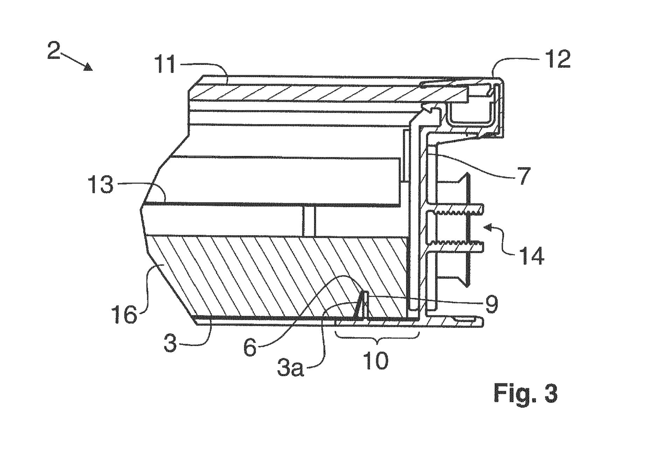

Figur 3 zeigt einen Ausschnitt einer Schnittzeichnung eines Solarthermie-Sonnenkollektors 2 mit einer erfindungsgemäßen Kollektorwanne 1. Dabei ist ein aufgebogener Randbereich 3a der Rückplatte 3 mit einem sich auf einem Schenkel 10 des Profilstücks 7 befindenden Steg 9 durch eine Schweißnaht 6 verbunden. Die so ausgebildete Kollektorwanne 1 bildet zusammen mit der als Solarglas 11 ausgeführten Abdeckung das Kollektorgehäuse 17 des Solarthermie-Sonnenkollektors 2 aus. Das Solarglas 11 wird dabei von einer Abdeckleiste 12 am Profilstück 7 festgehalten. Das Profilstück 7 verfügt zudem über ein Sammelrohr 14, welches etwa dem Zu- und Abtransport von Wärmeleitungsmedien des Wärmetauschers des Solarthermie-Sonnenkollektors 2 dient. Als weitere Komponenten des Solarthermie-Sonnenkollektors 2 sind außerdem ein Absorberblech 13 und eine Rückwanddämmung 16 gezeigt. Durch eine erfindungsgemäße Kollektorwanne 1 und einer entsprechend abgedichteten Abdeckung durch das Solarglas 11 kann so ein leichtes, temperatur- und witterungsbeständiges sowie wasser- und dampfdichtes Kollektorgehäuse 17 für einen Solarthermie-Sonnenkollektor 2 hergestellt werden. Ein solcher Solarthermie-Sonnenkollektor 2, der etwa bei Warmwasseraufbereitung, Heizungsunterstützung, Schwimmbaderwärmung, solarer Kühlung oder Prozesserwärmung zum Einsatz kommen kann, zeichnet sich konstruktionsbedingt durch hohe Robustheit, lange Lebensdauer und hohe Dämmung aus. Durch die erfindungsgemäße Abdichtung der Kollektorwanne kann zudem langzeitig ein hoher Wirkungsgrad und hohe Absorption des Solarthermie-Sonnenkollektors 2 ermöglicht werden.

### Bezugszeichenliste:

- 1: Kollektorwanne
- 2: Solarthermie-Sonnenkollektor
- 3: Rückplatte
- 3a: Randbereich
- 4: Rahmenkonstruktion
- 5: Innenraum
- 6: Schweißnaht
- 7: Profilstück
- 8: Schweißnaht
- 9: Steg
- 10: Schenkel
- 11: Solarglas
- 12: Abdeckleiste
- 13: Absorberblech
- 14: Sammelrohr
- 15: Rahmendurchführung
- 16: Rückwanddämmung
- 17: Kollektorgehäuse

## Patentansprüche

1. Kollektorwanne (1) für einen Solarthermie-Sonnenkollektor (2) mit einer Rückplatte (3) und einer Rahmenkonstruktion (4), die gemeinsam einen Innenraum (5) für Komponenten des Solarthermie-Sonnenkollektors (2) ausbilden, wobei die Rückplatte (3) und die Rahmenkonstruktion (4) durch eine umlaufende Schweißnaht (6) wasserdicht verbunden sind und wobei die Rahmenkonstruktion (4) aus mehreren, vorzugsweise vier, Profilstücken (7), vorzugsweise Aluminiumprofilen, zusammengesetzt ist, **dadurch gekennzeichnet, dass** die Profilstücke (7) einen dem Innenraum (5) zugewandten Steg (9) aufweisen und die umlaufende Schweißnaht (6) im Bereich des Stegs (9) angebracht ist.

2. Kollektorwanne (1) nach Anspruch 1, **dadurch gekennzeichnet, dass** die Profilstücke der Rahmenkonstruktion (4) durch je eine weitere Schweißnaht (8) wasserdicht verbunden sind.

3. Kollektorwanne (1) nach Anspruch 1 oder 2, **dadurch gekennzeichnet, dass** der Steg (9) auf einem, vorzugsweise zu der Rückplatte (3) im Wesentlichen parallelen, Schenkel (10) der Profilstücke (7) ausgeführt ist.

4. Kollektorwanne (1) nach einem der Ansprüche 1 bis 3, **dadurch gekennzeichnet, dass** die Rückplatte (3) im Bereich der Rahmenkonstruktion (4) aufgebogene Randbereiche (3a) aufweist.

5. Kollektorwanne (1) nach Anspruch 4, **dadurch gekennzeichnet, dass** die aufgebogenen Randbereiche (3a) mit der Rückplatte (3) einen stumpfen Winkel einschließen.

6. Kollektorwanne (1) nach einem der Ansprüche 1 bis 5, **dadurch gekennzeichnet, dass** die Randbereiche (3a) der Rückplatte (3) zum Anbringen der Schweißnaht (6) federnd an die Rahmenkonstruktion (4) angepresst sind.
